# EUROPÄISCHE PATENTSCHRIFT

(11) **EP 0 768 685 B1**
(45) Veröffentlichungstag und Bekanntmachung des Hinweises auf die Patenterteilung: **04.03.1998**
(21) Anmeldenummer: 96104654.7
(22) Anmeldetag: 23.03.1996
(51) Int. Cl.: H01F 41/04, H01F 41/06, H01F 41/12, G01F 1/58

(54) **Verfahren zum Herstellen von unterschiedlich dimensionierten Sattelspulen**
Method of manufacturing saddle coils having different dimensions
Procédé de fabrication des bobines formées de dimensions différentes

(30) Priorität: 13.10.1995 EP 95116189
(43) Veröffentlichungstag der Anmeldung: 16.04.1997
(73) Patentinhaber: Endress + Hauser Flowtec AG, CH-4153 Reinach BL 1 (CH)
(72) Erfinder: Unterseh, Roland, 68300 Saint Louis (FR)
(74) Vertreter: Morstadt, Volker, Dipl.-Ing.

(56) Entgegenhaltungen:
- EP-A- 0 566 303
- US-A- 1 965 330

## Beschreibung

Die Erfindung betrifft ein Verfahren zum Herstellen von unterschiedlich dimensionierten Sattelspulen, die sich jeweils an eine von voneinander verschieden dimensionierten gekrümmten Flächen anschmiegt und die mehrere Windungen hat.

Derartige Sattelspulen dienen z.B. bei magnetisch-induktiven Durchflußaufnehmern zur Erzeugung eines Magnetfelds. Mit magnetisch-induktiven Durchflußmessern läßt sich bekanntlich der Volumendurchfluß einer elektrisch leitenden Flüssigkeit, die in einem Meßrohr fließt, messen. Der die Flüssigkeit berührende Teil des Meßrohrs ist elektrisch nicht-leitend, damit eine nach dem Faraday'schen Induktionsgesetz vom erwähnten Magnetfeld induzierte elektrische Spannung nicht kurzgeschlossen wird, falls das Meßrohr vollständig aus einem Metall bestünde, also die Flüssigkeit das Metall berührte. Dabei durchsetzt das Magnetfeld das Meßrohr i.a. senkrecht zu dessen Längsachse.

Bei magnetisch-induktiven Durchflußaufnehmern ist die erwähnte gekrümmte Fläche eine Teilfläche der Mantelfläche des praktisch immer kreiszylindrischen Meßrohrs, an deren Krümmung die Sattelspule möglichst gut angepaßt ist, d.h. deren Windungen verlaufen abschnittsweise parallel zur Mantelfläche, wie dies unten noch näher erläutert ist.

In der EP-A-0 566 303 ist ein Verfahren zum Herstellen einer auf den Hals und den daran anschließenden kugelkalottenförmigen Teil einer Fernseh-Bildröhre passenden Ablenkspule beschrieben, die sich also an die gekrümmte Fläche dieser Teile der Fernseh-Bildröhre anschmiegt und die mehrere Windungen hat, wobei
- für die Ablenkspule ein vorgefertigter Draht mit einer einzigen Umhüllung aus einem ersten Isolierlack verwendet wird,
   -- von dem zunächst ein ebenes, mehrere parallele Drahtstücke aufweisendes Drahtband durch gemeinsame Umhüllung mit einem flüssigen und nach der Umhüllung erstarrenden zweiten Isolierlack erzeugt wird,
      --- der durch Erwärmung auf eine Temperatur, die niedriger als die Erweichungs-Temperatur des ersten Isolierlacks ist, wieder verflüssigbar ist,
- das Drahtband auf und in Nuten eines vorgefertigten und somit eine an die Form der Teile der Fernseh-Bildröhre angepaßte endgültige Raumform bereits aufweisenden Spulenträgers gewickelt wird,
   -- der einen auf den Hals der Fernseh-Bildröhre aufzuschiebenden rohrförmigen Teil aufweist,
- durch die Ablenkspule ein Strom mit einer derart gewählten Stromstärke,
   -- daß die Erweichungs-Temperatur erreicht wird,
- solange geschickt wird,
   -- bis der zweite Isolierlack die Windungen mindestens miteinander verklebt, insb. miteinander verbäckt, und
- nach einem Abschalten des Stromes der zweite Isolierlack erstarren gelassen wird.

Es ist offensichtlich ein Nachteil, daß bei diesem Verfahren für unterschiedliche Bildröhren-Größen auch entsprechend dimensionierte vorgefertigte Spulenträger verwendet und daß somit auch zahlreiche Typen von Spulenträgern auf Lager gehalten werden müssen. Einem einzigen Spulenträger-Typ können daher nicht mehrere Bildröhren-Größen zugeordnet werden.

Ferner ist in der US-A 19 65 330 ein Verfahren zum Herstellen einer ebenen Luftspule beschrieben, die mehrere Windungen hat, wobei
- ein vorgefertigter Draht mit einer Umhüllung aus einem Textilgewebe verwendet wird,
   -- das mit einem durch Erwärmung wieder erweichbaren Isolierlack getränkt ist,
- der Draht in einer vorübergehenden Form zu einer ebenen Spule gewickelt wird,
- Form und Spule auf eine Temperatur erwärmt werden, bei der der Isolierlack ausreichend erweicht, so daß die einzelnen Windungen der Spule miteinander verbacken,
- der Isolierlack wieder erstarren gelassen wird und
- die Spule als fertige Luftspule der Form entnommen wird.

Eine Aufgabe der Erfindung besteht darin, ein Verfahren zur kostengünstigen Herstellung von Sattelspulen anzugeben, die eine gute Langzeit-Formbeständigkeit haben, und zwar obwohl aufgrund der Stärke des für die Sattelspulen verwendeten Drahtes mit diesem allein im gewickelten Zustand die Formbeständigkeit nicht erreicht werden kann.

Ferner sollen mit einem einzigen Spulenträger-Typ Sattelspulen für mehrere, voneinander abweichend dimensionierte gekrümmte Flächen herstellbar sein.

Zur Lösung dieser Aufgaben besteht die Erfindung in einem Verfahren zum Herstellen von unterschiedlich dimensionierten Sattelspulen, die sich jeweils an eine von voneinander verschieden dimensionierten gekrümmten Flächen anschmiegt und die mehrere Windungen hat, wobei
- für die Sattelspule ein bereits vorgefertigter Draht verwendet wird,
   -- der eine erste Isolierlack-Umhüllung direkt auf dem Draht und eine auf der ersten Isolierlack-Umhüllung angebrachte zweite Isolierlack-Umhüllung aufweist, die eine Verback-Temperatur hat, die niedriger als die Erweichungs-Temperatur der ersten Isolierlack-Umhüllung ist,
- die Windungen auf einen Spulenträger,
   -- der zwar aus einem biegbaren, bei der Verback-Temperatur jedoch hinsichlich der einzelnen Teile des Spulenträgers formbeständigen Kunststoff vorgefertigt wurde,
- zunächst zu einer ebenen Flachspule gewickelt werden,
- die Flachspule zusammen mit dem Spulenträger an die gekrümmte Fläche oder einen entsprechenden Dummy zu einer noch nicht formbeständigen Sattelspule angeschmiegt wird,
- durch diese ein Strom mit einer derart gewählten Stromstärke,
   -- daß die Verback-Temperatur mindestens erreicht wird,
- solange geschickt wird,
   -- bis die zweiten Isolierlack-Umhüllungen der Windungen mindestens miteinander verklebt, insb. miteinander verbacken oder verschmolzen, sind,
- nach einem Abschalten des Stromes die zweite Isolierlack-Umhüllung erstarren gelassen wird und
- die nunmehr formbeständige Sattelspule zusammen mit dem Spulenträger gegebenenfalls weiterverarbeitet wird.

Nach einer Weiterbildung der Erfindung kann als gekrümmte Fläche eine Teilfläche der Mantelfläche eines Kreiszylinders dienen.

Nach einer anderen Weiterbildung der Erfindung kann als Material des Spulenträgers Fluorethylenpropylen gewählt werden.

Eine nach der Erfindung hergestellte Sattelspule kann bevorzugt in einem magnetisch-induktiven Durchflußaufnehmer mit einem Meßrohr verwendet werden, an dessen Mantelfläche sich Sattelspule und Spulenträger anschmiegen.

Ein Vorteil der Erfindung besteht u.a. darin, daß zur Erzielung der Beständigkeit der gekrümmten Form der Sattelspule keine weiteren Mittel erforderlich sind, wie etwa Umwicklungen mit stabilisiernden Schichten, z.B. Stoffbändern, die nach dem Umwickeln gegebenenfalls noch mit einem aushärtbaren Lack getränkt werden müssen.

Ein weiterer Vorteil besteht darin, daß es durch den Spulenträger ermöglicht wird, in Normen oder Standards, wie z.B. DIN oder CENELEC, vorgeschriebene Sicherheitsabstände zwischen spannungsführenden Teilen, also Windungen der Sattelspule, und auf dem Potential des Schaltungsnullpunkts liegenden Teilen, also z.B. der Mantelfläche eines metallischen Meßrohrs von magnetisch-induktiven Durchflußaufnehmern, einzuhalten. Diesem Vorteil zugrunde liegende Erwägungen brauchen bei der eingangs erwähnten Ablenkspule nicht angestellt zu werden, da diese ja von den erwähnten Teilen einer aus Glas bestehenden Bildröhre getragen wird.

Die Erfindung wird nun anhand der Figuren der Zeichnung näher erläutert, in denen u.a. ein Ausführungsbeispiel einer entsprechend dem Verfahren der Erfindung hergestellten Sattelspule in zwei verschiedenen Stadien des Herstellens dargestellt ist, wobei Bezugszeichen gleicher Teile in mehreren Figuren der Übersichtlichkeit halber nur jeweils in einer der Figuren eingetragen sind.
- Fig. 1 zeigt: perspektivisch einen Spulenträger,
- Fig. 2 zeigt: ebenfalls perspektivisch eine auf den Spulenträger gewickelte Flachspule, und
- Fig. 3 zeigt: wiederum perspektivisch eine Sattelspule im fertigen Zustand.

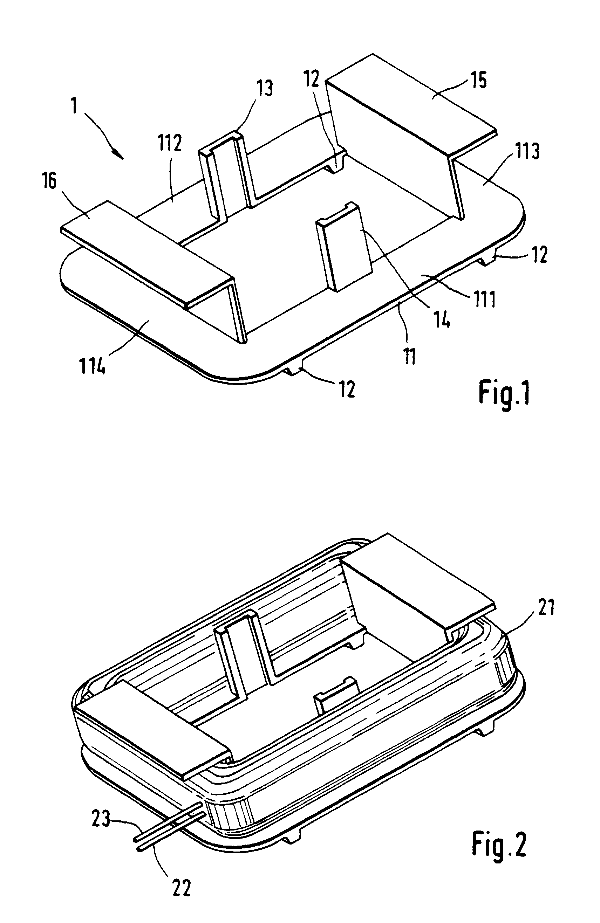

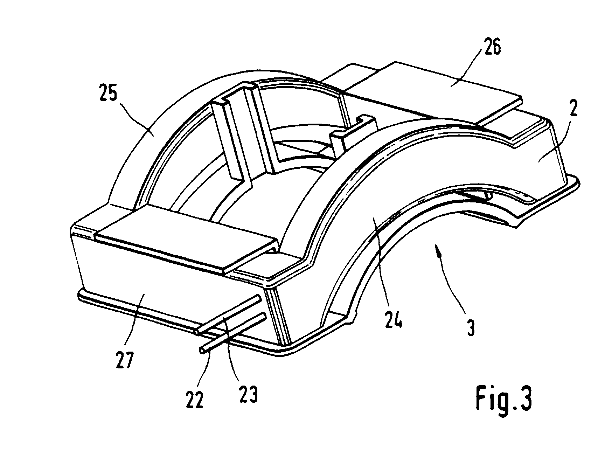

In Fig. 1 ist ein Ausführungsbeispiel eines geeigneten Spulenträgers 1 gezeigt, auf den die Windungen einer herzustellenden Sattelspule 2 (vgl. Fig. 3) gewickelt werden sollen und der somit die fertige Sattelspule trägt.

Der Spulenträger 1 ist aus einem biegbaren, jedoch formbeständigen Kunststoff, wie z.B. bevorzugt aus Fluorethylenpropylen, vorgefertigt. Der Spulenträger 1 kann als halb offen betrachtet werden.

Dies ergibt sich daraus, daß zu einer rahmenartigen Grundplatte 11, die mit Füßchen 12 versehen ist, keine dazu parallele Deckplatte vorgesehen ist. Die Füßchen stützen sich im fertigen und endgültigen Einbauzustand auf der gekrümmten Fläche ab, an die sich die Sattelspule 2 dann anschmiegt.

Zur Halterung der Sattelspule 2 sind lediglich zwei einander gegenüberliegende Vertikalstege 13, 14, in Fig. 1 an einem vorderen bzw. einem hinteren Rahmensteg 111, 112 angeordnet, sowie zwei einander gegenüberliegende Winkelstege 15, 16, an einem rechten bzw. einem linken Rahmensteg 113, 114 angeordnet, vorgesehen.

Die einzelnen Teile des Spulenträgers 1 tragen zu dessen oben erwähnter Eigenschaft bei, vorgeschriebene Sicherheitsabstände einhalten zu können. Gegenüber der gekrümmten Fläche, also z.B. gegenüber einem Meßrohr eines magnetisch-induktiven Durchflußmessers, ergibt sich der Sicherheitsabstand additiv durch die Dicke der Grundplatte 11 und die Höhe der Füßchen 12.

Wenn in der Öffnung der Sattelspule 2 ein ferromagnetischer Kern, z.B. in Form eines Kernblechs, vorgesehen sein soll, so tragen zur Einhaltung des Sicherheitsabstands die Vertikalstege 13, 14 und die Winkelstege 15, 16 ebenfalls bei, letztere insb. mit ihren zur Grundplatte 11 parallelen Schenkeln im Falle der erwähnten Kernbleche, die sich dann über die Schenkel hinaus erstrecken können.

Ferner ist es wegen des geschilderten Aufbaus des Spulenträgers 1 möglich, mit einem einzigen, entsprechend dimensionierten Typ mehrere, zu voneinander abweichend dimensionierten gekrümmten Flächen gehörende Sattelspulen-Typen herzustellen.

Die Sattelspule wird auf den Spulenträger 1 so gewickelt, daß die jeweiligen Ebenen der einzelnen Windungen parallel zur Grundplatte 11 verlaufen. Bei einer vorgegebenen bzw. beabsichtigten Windungszahl und somit Induktivität der Sattelspule wird in Abhängigkeit vom Außen-Durchmesser des vorgesehenen Drahtes die Höhe der Winkelstege 15, 16 und entsprechend die Höhe der Vertikalstege 13, 14 sowie die Breite der Rahmenstege 111, 112, 113, 114 bemessen.

Der dadurch an sich zur Verfügung stehende Wickelraum wird nur soweit ausgenutzt, daß die Rahmenstege über die fertige Sattelspule noch etwas vorstehen, vgl. die Fig. 2 und 3, was die Einhaltung der erwähnten Sicherheitsabstände weiter begünstigt.

In Fig. 2 ist derjenige Zustand dargestellt, in dem sämtliche Windungen auf den Spulenträger 1 gewickelt sind und in dem somit die spätere Sattelspule zunächst in der Form einer Flachspule 21 vorliegt, von der der Anfang 22 bzw. das Ende 23 herausgeführt sind.

Für die Sattelspule 2 ist ein spezieller, bereits, z.B. von einem Drahtlieferanten, vorgefertigter Draht zu verwenden, der eine erste Isolierlack-Umhüllung direkt auf dem Draht und eine auf der ersten Isolierlack-Umhüllung angebrachte zweite Isolierlack-Umhüllung aufweisen muß. Dabei muß die letztere eine Verback-Temperatur haben, die niedriger als die Erweichungs-Temperatur der ersten Isolierlack-Umhüllung ist. Es muß also ein sogenannter Doppellackdraht verwendet werden. Die Verback-Temperatur der zweiten Isolierlack-Umhüllung kann z.B. ca. 180 °C bis 230 °C betragen.

Unter Verback-Temperatur ist diejenige Temperatur zu verstehen, bei der die zweite Isolierlack-Umhüllung schon so weich geworden ist, daß die einzelnen Lackanteile von nebeneinander liegenden Windungen miteinander verfließen, während die erste Isolierlack-Umhüllung bei der Verback-Temperatur noch hart ist, da ihre Erweichungs-Temperatur höher als die Verback-Temperatur ist. Die erwähnte Formbeständigkeit des Kunststoffs des Spulenträgers 1 bezieht sich selbstverständlich ebenfalls mindestens auf die Verback-Temperatur.

Nachdem die Flachspule 21 fertig gewickelt worden ist, wird sie zusammen mit dem Spulenträger 1 über die Füßchen 12 an eine gekrümmte Fläche, die entweder bereits diejenige Fläche ist, an die die Sattelspule angepaßt sein soll, oder an einen entsprechenden Dummy angeschmiegt. Die gekrümmte Fläche kann insb. eine Teilfläche einer Mantelfläche eines Kreiszylinders, also z.B. die des Meßrohrs eines magnetisch-induktiven Durchflußmessers sein.

Das Anschmiegen, das in Fig. 3 bei 3 stattgefunden hat, wird durch entsprechendes Verbiegen von Spulenträger 1 und Flachspule 2 erreicht, wobei gegebenenfalls ein geeignetes Werkzeug benutzt werden kann, das von der den Füßchen 12 abgewandten Seite her gegen Spulenträger 1 und Flachspule 2 drückt.

Nun wird im angedrückten Zustand die zu diesem Verfahrens-Zeitpunkt noch nicht formbeständige Sattelspule mit einem Strom beschickt, der in Abhängigkeit vom ohmschen Widerstand der Sattelspule, eine derart gewählte Stromstärke hat, daß die Verback-Temperatur mindestens erreicht wird.

Der Strom kann ein Gleich-, ein Wechsel- oder ein Impulsstrom sein. Der Strom wird solange durch die noch nicht formbeständige Sattelspule geschickt, bis die zweiten Isolierlack-Umhüllungen von deren Windungen mindestens miteinander verklebt, insb. miteinader verbacken oder verschmolzen, sind.

Nach einem Abschalten des Stromes werden die erweichten zweiten Isolierlack-Umhüllungen der einzelnen Windungen erstarren gelassen. Danach ist die Sattelspule 2 fertig hergestellt, wie in Fig. 3 dargestellt ist.

Die nunmehr formbeständige Sattelspule 2 kann zusammen mit dem Spulenträger 1 gegebenenfalls weiterverarbeitet werden, also bevorzugt am Meßrohr eines magnetisch-induktiven Durchflußaufnehmers engültig befestigt werden.

In diesem Fall verlaufen die Windungen der Sattelspule, wie eingangs bereits kurz erwähnt wurde, abschnittsweise parallel zu der erwähnten Teilfläche der Mantelfläche des Meßrohrs, und zwar folgt der in Fig. 3 vorn bzw. hinten verlaufende, gekrümmte Spulenteil 24, 25 parallel einem jeweiligen Sektor des Umfangskreises des Meßrohrs, während der rechts bzw. links jeweils von vorn nach hinten verlaufende, nicht-gekrümmte, gerade Spulenteil 26, 27 einer jeweiligen, achs-parallelen Mantelgeraden des Meßrohrs folgt.

Zum Ausführungsbeispiel der Fig. 3 ist noch anzumerken, daß die zeichnerische Darstellung der Rundungen der Ecken der Sattelspule 2 von deren zeichnerischer Darstellung in Fig. 2 deswegen abweicht, weil die Figuren mit einem Computer-Zeichensystem gezeichnet worden sind, mit dem die in Fig. 3 an sich erforderliche Darstellung von Krümmungen in zwei zueinander senkrechten Ebenen nur in der gezeigten Weise möglich ist. An sich müßten also in Fig. 3 die Ecken wie in Fig. 2 gezeichnet sein. Diese geringe Ungenauigkeit von Fig. 3 ist jedoch für die Erläuterung und für das Verständnis der Erfindung nicht von Bedeutung.

## Patentansprüche

1. Verfahren zum Herstellen von unterschiedlich dimensionierten Sattelspulen (2), die sich jeweils an eine von voneinander verschieden dimensionierten gekrümmten Flächen anschmiegt und die mehrere Windungen hat, wobei
- für die Sattelspule ein bereits vorgefertigter Draht verwendet wird,
-- der eine erste Isolierlack-Umhüllung direkt auf dem Draht und eine auf der ersten Isolierlack-Umhüllung angebrachte zweite Isolierlack-Umhüllung aufweist, die eine Verback-Temperatur hat, die niedriger als die Erweichungs-Temperatur der ersten Isolierlack-Umhüllung ist,
- die Windungen auf einen Spulenträger (1),
-- der aus einem zwar biegbaren, bei der Verback-Temperatur jedoch hinsichtlich der einzelnen Teile des Spulenträgers formbeständigen Kunststoff vorgefertigt wurde,
- zunächst zu einer ebenen Flachspule (21) gewickelt werden,
- die Flachspule zusammen mit dem Spulenträger (1) an die gekrümmte Fläche oder einen entsprechenden Dummy zu einer noch nicht formbeständigen Sattelspule angeschmiegt wird,
- durch diese ein Strom mit einer derart gewählten Stromstärke,
-- daß die Verback-Temperatur mindestens erreicht wird,
- solange geschickt wird,
-- bis die zweiten Isolierlack-Umhüllungen der Windungen mindestens miteinander verklebt, insb. miteinander verbacken oder verschmolzen, sind,
- nach einem Abschalten des Stromes die zweite Isolierlack-Umhüllung erstarren gelassen wird und
- die nunmehr formbeständige Sattelspule (2) zusammen mit dem Spulenträger (1) gegebenenfalls weiterverarbeitet wird.

2. Verfahren nach Anspruch 1, bei dem eine Teilfläche einer Mantelfläche eines Kreiszylinders als gekrümmte Fläche dient.

3. Verfahren nach Anspruch 1, bei dem als Material des Spulenträgers (1) Fluorethylenpropylen gewählt wird.

4. Verwendung einer nach dem Verfahren der Ansprüche 1 und 2 hergestellten Sattelspule (2) in einem magnetisch-induktiven Durchflußaufmehmer mit einem Meßrohr, an eine Teilfläche von dessen Mantelfläche sich Sattelspule und Spulenträger (1) anschmiegen.

## Claims

1. A method of manufacturing differently dimensioned saddle coils (2) which each fit one of differently dimensioned curved surfaces and which have a number of turns, wherein
- a prefabricated wire is used for the saddle coil,
-- said wire having a first insulating-varnish coating directly thereon and a second insulating-varnish coating applied to the first insulating-varnish coating, said second insulating-varnish coating having a baking temperature lower than the softening point of the first insulating-varnish coating;
- the wire is first wound into a flat coil (21) on a coil form (1)
-- which was prefabricated from a flexible plastic which is dimensionally stable with respect to the individual parts of the coil form at the baking temperature;
- the flat coil, together with the coil form (1), is fitted to the curved surface or a corresponding dummy to form a still dimensionally unstable saddle coil,
- through the latter, a current of such a strength that the baking temperature is at least reached is sent
-- until the second insulating-varnish coatings of the turns are bonded, particularly baked or fused, at least to each other;
- after the current has been switched off, the second insulating-varnish coating is allowed to solidify; and
- the now dimensionally saddle coil (2), together with the coil form (1), is put to an intended use.

2. A method as claimed in claim 1 wherein the curved surface is a portion of a surface of a circular cylinder.

3. A method as claimed in claim 1 wherein the coil form (1) is made of fluorinated ethylene propylene.

4. Use of a saddle coil (2) manufactured by the method of claims 1 and 2 in an electromagnetic flow sensor with a measuring tube to a surface portion of which the saddle coil and the coil form (1) are fitted.

## Revendications

1. Procédé pour la fabrication de bobines en sellette (2) de dimensions différentes qui épousent respectivement la forme de surfaces courbes de dimensions différentes les unes des autres et qui présentent plusieurs spires, procédé selon lequel
- pour la bobine en sellette, on a recours à un fil métallique préfabriqué,
-- qui présente une première gaine de vernis isolant en contact direct avec le fil métallique et une seconde gaine de vernis isolant qui est appliquée sur la première gaine de vernis isolant et qui présente une température de cuisson inférieure à la température de ramollissement de la première gaine de vernis isolant,
- les spires se trouvant sur un porte-bobines (1),
-- qui est préfabriqué à partir d'une matière synthétique souple, mais cependant stable en dimension à la température de cuisson par rapport à chacune des parties du porte-bobines,
- les spires sont tout d'abord enroulées en une bobine plate plane (21),
- la bobine plate, avec le porte-bobines (1), épouse étroitement la forme de la surface courbe ou d'un mannequin correspondant pour former une bobine en sellette qui n'est pas encore stable en dimension,
- on envoie à travers cette dernière un courant d'une intensité sélectionnée
-- de manière à obtenir au moins la température de cuisson,
- jusqu'à ce que les secondes gaines de vernis isolant des spires se collent au moins les unes aux autres, en particulier s'agglutinent ou se soudent entre elles,
- après la coupure du courant, la seconde gaine de vernis isolant peut se solidifier à nouveau et
- la bobine en sellette (2), désormais stable en dimension, avec le porte-bobines (1), peut subir éventuellement un traitement ultérieur.

2. Procédé selon la revendication 1, selon lequel une surface partielle d'une surface d'enveloppe d'un cylindre circulaire sert de surface courbe.

3. Procédé selon la revendication 1, selon lequel on choisit le propylène-éthylène fluoré pour le matériau du porte-bobines (1).

4. Utilisation d'une bobine en sellette (2) fabriquée suivant le procédé des revendications 1 et 2 dans un débitmètre magnéto-inductif muni d'un tube de mesure, la bobine en sellette et le porte-bobines (1) venant se plaquer contre une surface partielle de la surface d'enveloppe dudit tube de mesure.
